(19) Europäisches Patentamt
European Patent Office
Office européen des brevets

(11) **EP 3 168 586 B1**

(12) **FASCICULE DE BREVET EUROPEEN**

(45) Date de publication et mention de la délivrance du brevet:
**06.06.2018 Bulletin 2018/23**

(21) Numéro de dépôt: **16198037.0**

(22) Date de dépôt: **09.11.2016**

(51) Int Cl.:
*G01L 15/00* (2006.01)       *F01D 5/14* (2006.01)
*G01L 19/14* (2006.01)       *G01P 5/165* (2006.01)
*G01M 9/06* (2006.01)       *G01M 15/14* (2006.01)
*G01F 1/46* (2006.01)       *F01D 21/00* (2006.01)
*G01P 5/10* (2006.01)       *G01P 5/14* (2006.01)
*G01D 11/24* (2006.01)

(54) **DISPOSITIF DE MESURE DE GRANDEURS AÉRODYNAMIQUES DESTINÉ À ÊTRE PLACÉ DANS UNE VEINE D'ÉCOULEMENT D'UNE TURBOMACHINE**

VORRICHTUNG ZUM MESSEN DER AERODYNAMISCHEN GRÖSSEN, DIE ZUM POSITIONIEREN IN EINER STRÖMUNGSBAHN EINER TURBOMASCHINE BESTIMMT IST

DEVICE FOR MEASURING AERODYNAMIC VARIABLES INTENDED FOR BEING PLACED IN AN AIR STREAM OF A TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2015 FR 1560803**

(43) Date de publication de la demande:
**17.05.2017 Bulletin 2017/20**

(73) Titulaire: **Safran Aircraft Engines**
**75015 Paris (FR)**

(72) Inventeurs:
• **GIORDAN, Jérémy**
  **77550 MOISSY-CRAMAYEL (FR)**
• **KOCKENPO, Florian Joseph Bernard**
  **77550 MOISSY-CRAMAYEL (FR)**

(74) Mandataire: **Regimbeau**
**20, rue de Chazelles**
**75847 Paris Cedex 17 (FR)**

(56) Documents cités:
**EP-A2- 1 835 129       FR-A1- 2 465 067**
**FR-A1- 3 019 209       GB-A- 2 041 104**
**US-A- 4 108 573       US-B1- 8 397 565**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE DE L'INVENTION

La présente invention se rapporte au domaine général des dispositifs de mesure de grandeurs aérodynamiques, et notamment de pression et de température, dans une veine d'écoulement d'une turbomachine.

## ETAT DE LA TECHNIQUE

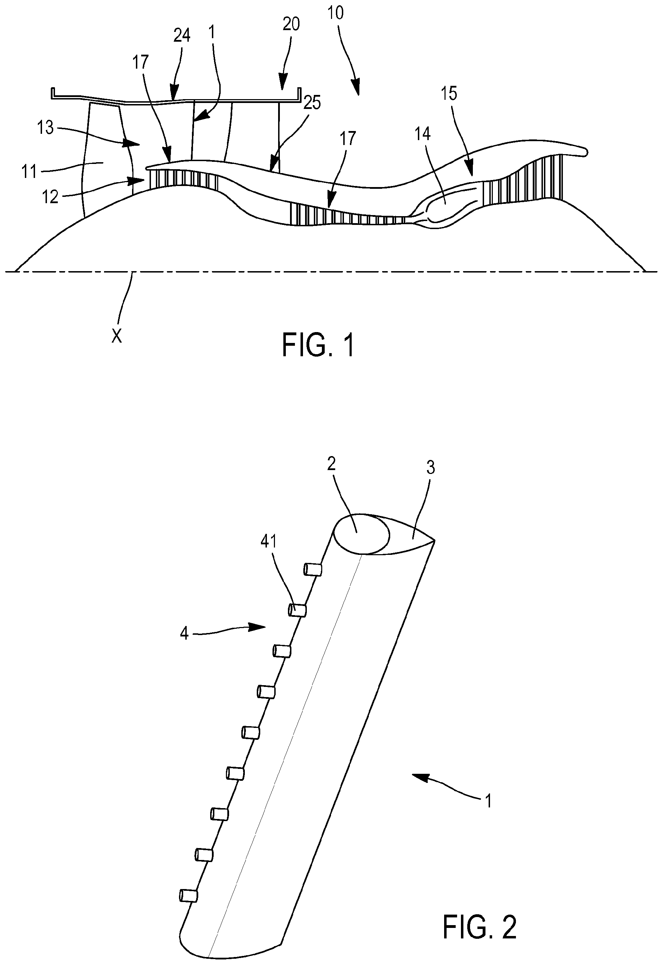

La figure 1 représente de façon schématique une turbomachine 10 du type à double flux et double corps auquel s'applique en particulier l'invention. Bien entendu, l'invention n'est pas limitée à ce type particulier de turboréacteur et s'applique à d'autres architectures de turboréacteurs et notamment à double flux et double corps.

La turbomachine 10 comprend, d'amont en aval dans le sens de l'écoulement des gaz, une soufflante 11, un ou plusieurs étages de compresseurs 17, une chambre de combustion 14, un ou plusieurs étages de turbines 15 et une tuyère d'échappement des gaz.

Le turboréacteur comprend également un carter intermédiaire 20 ayant, de façon connue en soi, une fonction structurale (car les efforts sont transmis par son intermédiaire). En particulier, les moyens de fixation du turboréacteur à la structure de l'avion dans la partie avant sont solidaires du carter intermédiaire. Le carter intermédiaire 20 se compose d'un moyeu 25, d'une virole annulaire extérieure 24 disposée autour du moyeu de façon concentrique à celui-ci.

Le turboréacteur comprend deux veines coaxiales d'écoulement de flux gazeux, à savoir une veine d'écoulement de flux primaire (ou flux chaud) 12, et une veine d'écoulement de flux secondaire (ou flux froid) 13.

Dans le cadre d'essais sur une turbomachine, il est parfois nécessaire de réaliser des mesures des grandeurs aérodynamiques, notamment de pression et de température, du flux gazeux s'écoulant dans les veines d'écoulement 12 ou 13 d'une turbomachine.

En référence aux figures 1 et 2, il est connu de réaliser la mesure de ces grandeurs aérodynamiques au moyen d'un dispositif de mesure de grandeurs aérodynamiques 1, placé sensiblement radialement dans une veine d'écoulement 13 ou 12 d'une turbomachine, comportant un corps cylindrique 2 et une pluralité de capteurs 4 de grandeur aérodynamique placés dans le corps cylindrique 2, les éléments sensibles 41 des capteurs s'étendant en dehors du corps cylindrique 2 au niveau d'un bord d'attaque 5. Ce dispositif de mesure 1 porte généralement le nom de peignes, de sondes ou de râteaux.

Les pertes aérodynamiques créées par la présence du dispositif de mesure 1 dans la veine d'écoulement 12 ou 13 perturbent cet écoulement lorsqu'il pénètre dans la turbomachine, ce qui a pour conséquence de perturber le fonctionnement de la turbomachine 10 et par conséquent de fausser les mesures de grandeurs aérodynamiques réalisées.

Afin de limiter la traînée du dispositif de mesure 1 dans la veine d'écoulement 12 ou 13, il est connu d'ajouter un carénage 3 rapporté sur le corps 2 de manière à fermer son bord de fuite suffisamment loin en aval pour éviter le décollement du flux en aval (figure 2).

Le dispositif de mesure 1 dans la veine d'écoulement 12 ou 13 est soumis à de fortes sollicitations vibratoires.

Une première source vibratoire est par exemple consécutive du balourd résiduel des ensembles en rotation, c'est-à-dire des rotors basse-pression et haute-pression. Une seconde source vibratoire a pour origine l'alternance des phases de compression et de dépression due à la rotation d'une rangée d'aubes mobiles. Cette seconde source vibratoire s'avère particulièrement importante lorsque l'organe de mesure est agencé immédiatement en aval d'une roue mobile.

A titre d'exemple, une roue de soufflante, comportant 30 aubes, tournant à une vitesse de rotation de 2000 tours par minute créée une vibration à une fréquence de 1000 Hz. Si le premier mode propre de l'organe de mesure est voisin de 1000 Hz, l'organe présente alors un risque élevé d'entrer en résonnance.

Un dispositif de mesure 1 a des fréquences propres qui sont fixes et qui sont fonction de ses caractéristiques structurelles et dimensionnelles. Lorsque la fréquence de vibration du dispositif 1 se rapproche de sa fréquence de résonance de rang 1 ou ses fréquences propres harmoniques par exemple celle de rang 2, le risque de résonance du dispositif devient élevé.

Les phénomènes de résonance du dispositif de mesure 1 sont susceptibles d'engendrer des fissures dans le dispositif de mesure 1 pouvant impacter son intégrité mécanique. Dans des cas extrêmes, la formation de criques ou de fissures consécutives aux vibrations peut conduire à la dislocation partielle ou totale du dispositif. Les débris ainsi libérés circulent dans la veine et peuvent endommager des parties de la turbomachine agencées en aval. On comprend que les dégâts causés par une telle dislocation peuvent être particulièrement importants lorsque le dispositif de mesure est monté dans la veine primaire 12 puisque les débris peuvent endommager la chambre de combustion et les parties fixes et rotatives des turbines haute et basse pression.

Des dispositifs de mesure de grandeurs aérodynamiques pour turbomachines sont décrits par exemple dans les documents US8397565 et GB2041104.

## EXPOSE DE L'INVENTION

Un but de l'invention est de proposer un dispositif de mesure de grandeurs aérodynamiques ayant une meilleur tenue mécanique lorsqu'il est placé dans une veine d'écoulement d'une turbomachine.

Ce but est atteint dans le cadre de la présente invention grâce à un dispositif de mesure de grandeurs aérodynamiques destiné à être placé transversalement dans une veine d'écoulement d'une turbomachine comportant :

- un corps amont ayant un profil de forme générale cylindrique définissant un bord d'attaque ;
- une pluralité de capteurs comportant des lignes d'instrumentation et des éléments sensibles, les lignes d'instrumentation des capteurs étant placées dans le corps, les éléments sensibles des capteurs s'étendant au niveau du bord d'attaque ;
- un carénage aval monté sur le corps amont et définissant un bord de fuite ;

le dispositif de mesure de grandeur aérodynamique étant caractérisé en ce que ledit carénage aval comprend, dans la direction longitudinale du corps amont portant les capteurs, plusieurs tronçons de carénage aval fixés indépendamment les uns des autres au corps, deux tronçons successifs étant reliés par une jonction qui dans la direction longitudinale du corps amont est plus souple que les tronçons.

Le fait que le carénage aval soit scindé transversalement en plusieurs tronçons, chacun fixé indépendamment au corps amont, et liés entre eux par une jonction souple, permet de minimiser la réponse vibratoire de l'ensemble constitué par le dispositif, lorsque celui-ci est soumis aux contraintes vibratoires du flux de la veine d'écoulement, et par conséquent d'améliorer la tenue mécanique du dispositif de mesure dans la veine d'écoulement.

En effet, la jonction souple permet d'introduire une rupture de raideur dans la structure du dispositif de mesure, ce qui permet de réduire la réponse vibratoire du dispositif lorsqu'il est positionné dans la veine d'écoulement.

En outre, la position de la jonction souple dans la direction longitudinale permet de jouer sur la raideur du dispositif et donc sur la fréquence de résonance de celui-ci, que ce soit la fréquence de rang 1 et/ou ses harmoniques. La position de la jonction souple sera choisie de manière à ce que la fréquence de résonnance du dispositif ne coïncide pas avec les fréquences de vibrations dans la veine d'écoulement.

L'invention est avantageusement complétée par les caractéristiques suivantes, prises individuellement ou en l'une quelconque de leurs combinaisons techniquement possibles.

Le carénage aval est constitué de deux tronçons.

Les tronçons présentent, dans la direction longitudinale du corps amont, un module d'Young de plus de 50GPa.

La jonction souple présente, dans la direction longitudinale du corps amont, un module d'Young de moins de 1GPa.

La jonction souple est en élastomère.

Les tronçons sont en métal. Le métal présente une plus faible rugosité que les élastomères surmoulés, ce qui permet de limiter les perturbations induites par le dispositif sur le flux en aval.

Le carénage aval est fixé au corps amont par frettage.

Le carénage aval est fixé au corps amont au moyen de goupilles. Les goupilles constituent les uniques points de liaison entre le corps amont et le carénage aval. Leur position et leur nombre permet de jouer sur la longueur libre en porte-à-faux et la masse en porte-à-faux du dispositif et donc sur les fréquences de résonnance de celui-ci. La terminologie « fréquence propre » inclue ici la fréquence propre de rang 1 et/ou ses harmoniques.

L'invention concerne également un procédé de détermination de la position de la jonction souple, ou le cas échéant des jonctions souples, dans la direction longitudinale d'un dispositif de mesure de grandeurs aérodynamiques destiné à être placé dans une veine d'écoulement d'une turbomachine, caractérisé en ce qu'il comporte des étapes de :

- détermination des fréquences vibratoires dans la veine d'écoulement;
- détermination de la position de la jonction souple dans la direction longitudinale du corps amont, de manière à ce que au moins une fréquence propre, et préférentiellement au moins la fréquence propre de 1$^{er}$ ordre, et préférentiellement toutes les fréquences propres, du dispositif de mesure de grandeurs aérodynamiques ne coïncide pas avec les fréquences vibratoires dans la veine d'écoulement.

L'invention concerne également un procédé de détermination de la position de la jonction souple, ou le cas échéant des jonctions souples, et/ou le nombre et/ou la position des goupilles dans un dispositif de mesure de grandeurs aérodynamiques, caractérisé en ce qu'il comporte des étapes de :

- détermination des fréquences vibratoires dans la veine d'écoulement ;
- détermination de la position de la jonction souple, et/ou le nombre et/ou la position des goupilles de manière à ce que au moins une fréquence propre, et préférentiellement au moins la fréquence propre de 1$^{er}$ ordre, et préférentiellement toutes les fréquences propres, du dispositif de mesure de grandeurs aérodynamiques ne coïncide pas avec les fréquences vibratoires dans la veine d'écoulement.

L'invention concerne également un procédé de test d'une turbomachine, caractérisé en ce qu'il comporte une étape au cours de laquelle on place un dispositif de mesure de grandeurs aérodynamiques dans une veine d'écoulement de la turbomachine.

## DESCRIPTION DES FIGURES

D'autres objectifs, caractéristiques et avantages sortiront de la description détaillée qui suit en référence aux dessins donnés à titre illustratif et non limitatif parmi lesquels :

- la figure 1, discutée plus haut, est un schéma simplifié d'une turbomachine sur lequel est localisé la veine d'écoulement du flux ;
- la figure 2, discutée plus haut, représente un dispositif de mesure de grandeurs aérodynamiques selon l'art antérieur ;
- les figure 3 et 4, représentent un dispositif de mesure de grandeurs aérodynamiques disposé dans une veine d'écoulement, la figure 3 étant une vue perpendiculaire au plan contenant l'axe longitudinal du dispositif et l'axe moteur, et la figure 4 une vue selon l'axe longitudinal du dispositif ;
- la figure 5 est une vue en coupe transversale d'un dispositif de mesure de grandeurs aérodynamiques conforme à l'invention ;
- la figure 6 est une vue en perspective montrant le côté d'un dispositif de mesure de grandeurs aérodynamiques conforme à l'invention ;
- la figure 7 est une vue partiellement en coupe longitudinale d'un dispositif de mesure de grandeurs aérodynamiques conforme à l'invention ;
- la figure 8 représente les fils d'instrumentation et la platine de fixation d'un dispositif de mesure de grandeurs aérodynamiques conforme à l'invention ;
- la figure 9a illustre un tenon faisant saillie du carénage aval inséré dans une mortaise ménagée dans le corps amont ;
- la figure 9b illustre une mortaise ménagée dans le corps amont ;
- la figure 9c ilustre un tenon faisant saillie du carénage aval ;
- la figure 10 illustre les paramètres de réglage d'un dispositif de mesure de grandeurs aérodynamiques conformément à l'invention ;
- la figure 11 représente en abscisses la distance de la jonction souple à l'extrémité du carénage aval sur la longueur du carénage aval et en ordonnées l'abattement des fréquences propres pour les modes 1F (flexion tangentielle) et 1E (flexion axiale).

## DESCRIPTION DETAILLEE DE L'INVENTION

En référence à la figure 1, le dispositif de mesure de grandeurs aérodynamiques 1 est destiné à être placé sensiblement transversalement dans la veine d'écoulement de flux primaire 12, ou dans la veine d'écoulement de flux secondaire 13.

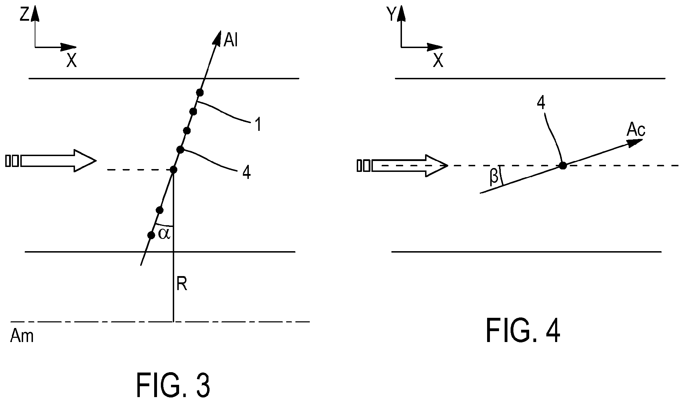

En référence aux figures 3 et 4, les mesures sont caractérisées par l'immersion du dispositif 1 dans la veine, caractérisée par la distance R du capteur à l'axe du moteur Am, l'angle d'incidence $\alpha$ du flux sur le dispositif 1 qui est l'angle entre l'axe du moteur Am et la direction longitudinale Al du dispositif 1 et l'angle de dérapage $\beta$ qui est l'angle entre l'axe du moteur Am et la direction Ac dans laquelle s'étend le carénage aval 3.

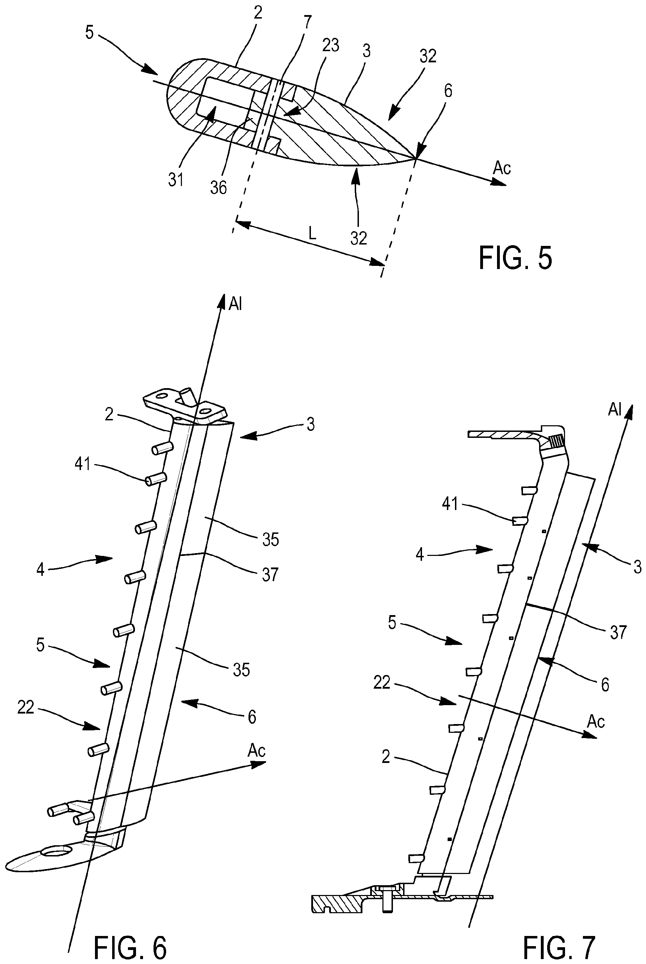

En référence aux figures 5 à 7, le dispositif de mesure de grandeurs aérodynamiques 1 comporte un corps amont 2 creux, une pluralité de capteurs 4 de grandeur aérodynamique placés dans le corps amont 2, et un carénage aval 3.

### Corps amont 2

Le corps amont 2 est de profil de forme générale cylindrique.

La surface du corps amont 2 est définie par une génératrice gardant une direction fixe qui définit la direction longitudinale du corps amont.

Le corps amont 2 est typiquement un cylindre creux. En particulier, le corps amont 2 peut être un cylindre de section circulaire, ovale ou en forme de C. Le corps amont 2 est préférentiellement en métal ou en plastique rigide (par rigide on entend ayant un module d'Young de plus de 50GPa).

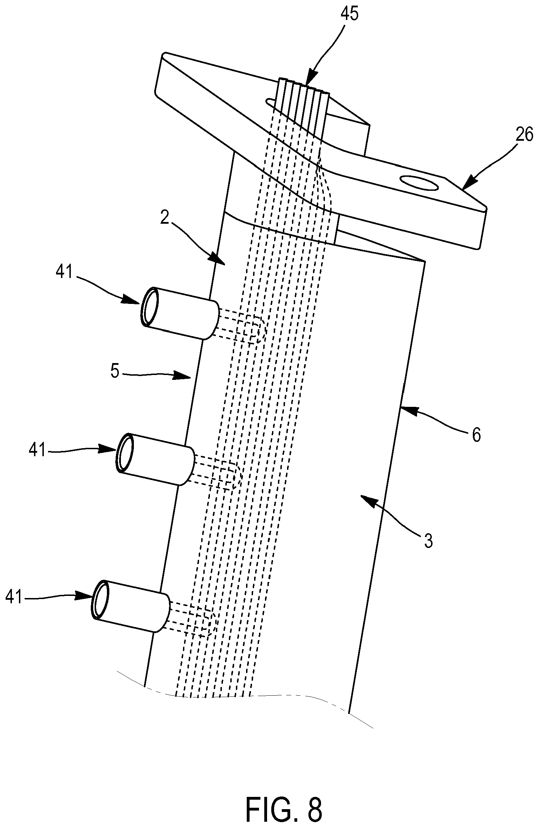

En référence à la figure 8, le corps amont 2 est fixé sensiblement radialement dans la veine d'écoulement de flux secondaire 13 soit à la virole annulaire extérieure 24 soit au moyeu 25, soit à la fois à la virole annulaire extérieure 24 et au moyeu 25. Notamment, le corps amont 2 peut être fixé par une platine de fixation 27 sur la paroi interne de la virole annulaire extérieure 24 comme illustré en figure 8.

### Capteurs 4

Les capteurs 4 sont des sondes de pression et de température.

A titre d'exemple, les sondes de température peuvent être du type capteur thermocouple, l'élément sensible de la sonde étant constitué de deux métaux de résistivité différente connectés ensemble, de manière à générer une différence de potentiel que l'on peut relier à la température mesurée.

Une telle sonde de température est bien connue de l'homme du métier et ne sera donc pas décrite en détails ici.

A titre d'exemple, les sondes de pression peuvent notamment être des tubes d'instrumentation tels que des sondes de Kiel. De telles sonde de pression sont bien connues de l'homme du métier et ne seront donc pas décrites en détails.

Les éléments sensibles 41 des capteurs s'étendant en dehors du corps amont 2 au niveau du bord d'attaque 5.

Les capteurs 4 sont reliés à un calculateur (non représenté sur les figures) où les données mesurées sont traitées. Les capteurs 4 sont reliés au calculateur par des lignes d'instrumentation 45 (figure 8) qui sont placées dans le corps amont cylindrique 2. Le calculateur est typiquement localisé en dehors du moteur.

### Carénage aval 3

En référence à la figure 5, le carénage aval 3 présente une face longitudinale 31 adaptée pour être assemblée sur le corps amont 2. Le carénage aval 3 présente deux autres faces longitudinales 32 qui se rejoignent en une arrête qui constitue le bord de fuite 6 lorsque le dispositif de mesure est positionné dans la veine d'écoulement 13.

La face du corps amont 2 non recouverte par le carénage aval et opposée au carénage aval 3 forme le bord d'attaque 5 lorsque le dispositif de mesure 1 est placé dans la veine d'écoulement 13.

La distance entre le point de fixation du carénage aval 3 au corps amont cylindrique 2 et le bord de fuite 6 est appelé longueur L libre en porte-à-faux du dispositif 1. La longueur L libre en porte-à-faux est typiquement comprise entre 2 et 4cm.

Le carénage aval 3 est typiquement de forme générale cylindrique.

La longueur du carénage aval 3, c'est-à-dire sa dimension dans la direction longitudinale, est typiquement comprise entre 1cm est 1m.

Le carénage aval 3 comprend, dans la direction longitudinale du corps amont 2, plusieurs tronçons de carénage aval 35 fixés indépendamment les uns des autres au corps 2.

A cet effet, le carénage aval 3 est scindé, selon des directions transversales, en plusieurs tronçons 35 montés sur le corps amont 2 côte à côte de manière à être alignés entre eux dans la direction longitudinale du corps amont.

En particulier, le carénage aval 3 peut est constitué de deux tronçons 35.

Le carénage aval 3 est préférentiellement métallique. En effet, le métal présente une plus faible rugosité que les élastomères surmoulés, ce qui permet de limiter les perturbations induites par le dispositif 1 sur le flux en aval. Le carénage aval 3 peut être obtenu taillé dans la masse puis scindé en tronçons 35.

Les tronçons 35 sont chacun fixés indépendamment au corps amont 2.

Les tronçons transversaux 35 sont typiquement montés par frettage sur le corps amont 2.

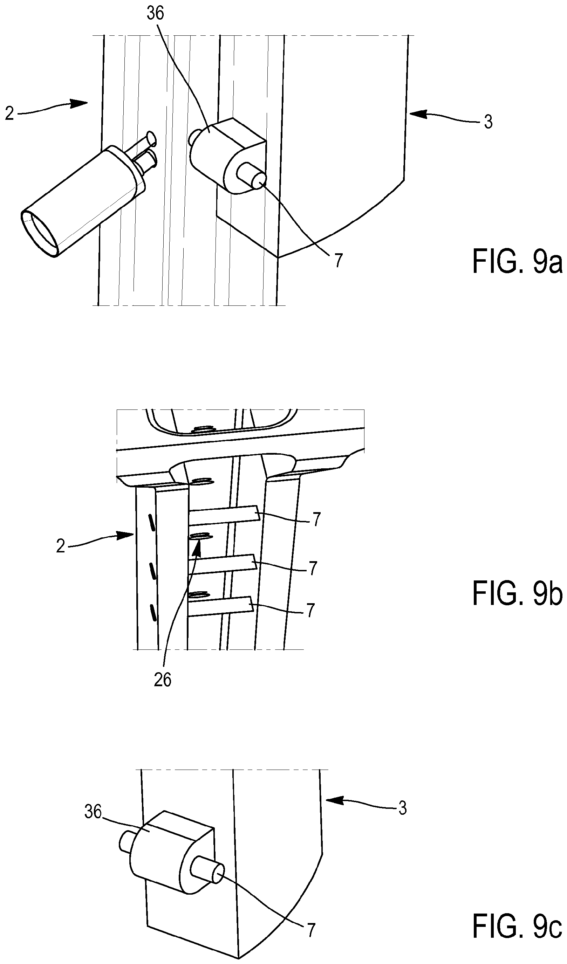

La face longitudinale 31 des tronçons 35 adaptée pour être assemblée sur le corps amont cylindrique 2 présente, à cet effet, un tenon 36 faisant saillie de la face longitudinale 31 et adapté pour être inséré dans une mortaise 26 correspondante, pratiquée dans le corps amont 2 (comme illustré sur la figure 9a). Comme illustré sur la figure 9b, la mortaise 26 est une cavité pratiquée dans le corps amont 2, pour recevoir le tenon 36 des tronçons 35. Comme illustré sur la figure 9c, le tenon 36 est une saillie cylindrique, généralement de section rectangulaire. La mortaise 26 est une cavité cylindrique, complémentaire du tenon 36 et généralement de section rectangulaire. Les tenons 36 sont en appui dans une mortaise 26 et non assemblés par ajustement serré.

Les tronçons 35 peuvent en outre être maintenus par des goupilles 7, de manière à limiter leur rotation sur le corps amont. Les goupilles 7 sont insérées dans le corps amont 2 de manière à traverser de part et d'autre la mortaise 26 et le tenon 36 sans dépasser du corps amont 2.

Les goupilles 7 sont typiquement des éléments cylindriques et généralement en métal. Elles peuvent être cannelées avec des cannelures longitudinales provoquant un gonflement du métal par refoulement ; au montage, les cannelures se déforment de manière élastique et assure le montage adhérent sans jeu.

Les goupilles 7 peuvent également être filetées.

Les tronçons 35 présente une élasticité faible mais non nulle qui leur permet de se déformer élastiquement sous l'effet des contraintes aérodynamiques lorsque le dispositif 1 est disposé dans la veine. Les tronçons 35 présentent, dans la direction longitudinale du corps amont, un module d'Young typiquement de plus de 50GPa, par exemple 69GPa pour l'aluminium.

Les tronçons 35 sont montés à débattement contraint l'un par rapport à l'autre.

A cet effet, deux tronçons 35 successifs sont reliés entre eux par une jonction 37 qui dans la direction longitudinale du corps amont 2 est plus souple que les tronçons 35.

Par plus souple dans la direction longitudinale du corps amont, on entend que la jonction 37a un module d'Young, dans la direction longitudinale du corps amont, plus faible, que les tronçons 35. La jonction souple 37 est typiquement en élastomère. La jonction souple 37 a typiquement, dans la direction longitudinale du corps amont, un module d'Young de moins de 1GPa.

La jonction souple 37 s'étend entre les faces transversales de deux tronçons 35 adjacent. La jonction souple 37 est préférentiellement fixée à chaque tronçon 35 sur toute la face transversale de celui-ci, pour maximiser l'adhérence de la jonction souple 37 au tronçon 35.

La jonction souple 37 est typiquement fabriquée par moulage par injection. La matière plastique est ramollie par chauffage puis injectée entre les deux tronçons 35, et ensuite refroidie.

La jonction souple 37 peut également être fabriquée par vulcanisation de polymère.

La longueur de la jonction souple 37 dans la direction longitudinale est typiquement de 1mm à 3mm.

La jonction souple 37 permet d'introduire une rupture de raideur dans la structure du dispositif de mesure 1, ce qui permet de réduire le comportement vibratoire du dispositif 1 lorsqu'il est positionné dans la veine d'écoulement.

Le fait que le carénage aval 3 soit scindé en tronçons 35 lié par une jonction souple 37 permet une adaptation des fréquences propres de l'ensemble constitué par le dispositif 1.

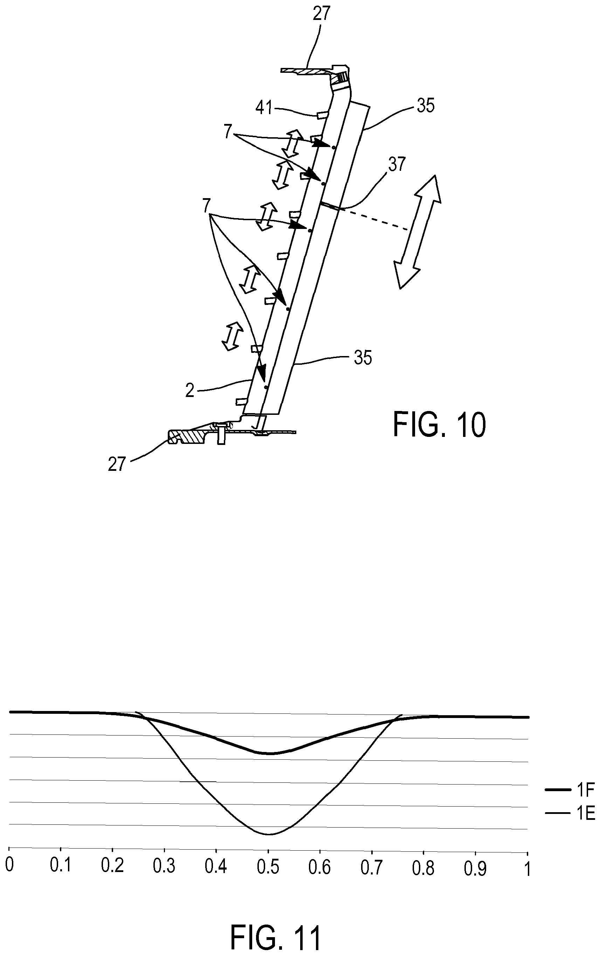

En référence à la figure 10, la localisation de la jonction souple 37, et/ou le nombre et/ou la position des goupilles 7, sont choisis de manière à optimiser le comportement vibratoire du dispositif 1 lorsque celui-ci est disposé dans la veine d'écoulement, et ce pour l'ensemble des régimes moteurs envisagés (régime ralenti, régime de croisière, etc).

La théorie des poutres donne une expression canonique pour les fréquences propres d'un système mécanique dont la morphologie s'apparente au dispositif 1 :

$$f_i = \frac{\alpha_i{}^2}{2\pi L^2} \sqrt{\frac{K}{M}}$$

Avec :

- $\alpha_i{}^2$ coefficient qui dépend de l'ordre du mode i∈{1, 2, ...} et des conditions d'accrochage du dispositif dans la veine ;
- L : longueur libre en porte-à-faux du dispositif 1,
- K : raideur du dispositif 1,
- M : masse en porte-à-faux du dispositif 1,

Le coefficient de raideur K dépend du positionnement de la ou les jonctions souples 37 dans la direction longitudinale du corps amont.

Comme illustré sur la figure 11, qui représente l'abattement des fréquences propres pour les modes 1F (flexion tangentielle) et 1E (flexion axiale), à savoir le rapport entre la fréquence propre d'un dispositif sans jonction souple et la fréquence propre d'un dispositif avec jonction souple, par rapport à la position de la jonction souple 37 dans la direction longitudinale du dispositif 1, à savoir le rapport (distance d'une unique jonction souple 37 à l'extrémité du carénage aval 3 / longueur du carénage aval), plus la jonction souple 37 est positionnée au milieu du dispositif 1, plus les fréquences des modes propres sont basses, inversement, plus la jonction souple 37 est loin du milieu du dispositif 1, plus les fréquences des modes propres sont hautes.

Comme on peut le voir sur la figure 11, l'abattement des fréquences propres est particulièrement important sur le domaine [0,3 ; 0,7].

Par ailleurs, le coefficient de raideur K, la masse M et la longueur libre en porte-à-faux L dépendent du nombre et de la position des goupilles 7.

En effet, les goupilles 7 constituent les uniques points de liaison entre le corps amont 2 et le carénage aval 3. Leur position permet de jouer sur la longueur libre en porte-à-faux L et la masse M en porte-à-faux. Plus la longueur libre en porte-à-faux L est grande, plus les fréquences propres sont basses et inversement.

La localisation de la jonction souple 37, et/ou le nombre et/ou la position des goupilles 7 sont choisis de manière à ce que les fréquences propres de l'ensemble constitué par le dispositif 1 ne coïncide pas avec les fréquences vibratoires induites par le flux dans la veine d'écoulement, afin d'éviter que l'ensemble constitué par le dispositif 1 ne rentre en résonnance lorsqu'il est placé dans le flux de la veine d'écoulement.

Il est à noter que le dispositif 1 permet d'adapter les fréquences propres de l'ensemble constitué par le dispositif 1 à la hausse comme à la baisse, alors qu'un carénage aval entièrement souple permet uniquement d'abaisser les fréquences propres de l'ensemble constitué par le dispositif. En effet, un gain de raideur K se traduit par une hausse des fréquences propres et un gain de masse M se traduit par une baisse des fréquences propres.

La localisation de la jonction souple 37, ou le cas échéant des jonctions souples, et/ou du nombre et/ou de la position des goupilles 7 peuvent notamment être déterminés par un procédé comportant des étapes de :

- détermination des fréquences vibratoires dans la veine d'écoulement 12 ou 13 ;
- détermination de la localisation de la jonction souple 37, et/ou le nombre et/ou la position des goupilles 7 de manière à ce que au moins une fréquence propre, et préférentiellement au moins la fréquence propre de 1er ordre, et préférentiellement toutes les fréquences propres, du dispositif de mesure de grandeurs aérodynamiques 1 ne coïncide pas avec les fréquences vibratoires dans la veine d'écoulement 13.

La détermination des fréquences vibratoires dans la veine d'écoulement peut être faite par le calcul ou effectuée expérimentalement ou par tout autre méthode appropriée.

La localisation de la jonction souple 37 et/ou du nombre et/ou de la position des goupilles 7 peuvent notamment être déterminés par une méthode itérative. En débutant par un choix d'une position initiale de la jonction souple 37, et/ou du nombre et/ou de la position des goupilles 7 considéré comme une première ébauche, on procède par itérations au cours desquelles on détermine une succession de solutions approximatives raffinées qui minimisent graduellement la réponse vibratoire de l'ensemble constitué par le dispositif 1. De préférence, la localisation de la jonction souple 37 et/ou du nombre et/ou de la position des goupilles 7 sont déterminés en procédant d'abord à la détermination de la localisation de la jonction souple 37 par itérations, puis à la détermination du nombre de goupilles 7 par itérations, puis à la détermination de la position de chaque goupilles 7 par itérations.

**Revendications**

1. Dispositif de mesure de grandeurs aérodynamiques (1) destiné à être placé transversalement dans une veine d'écoulement (12, 13) d'une turbomachine comportant :

- un corps amont (2) ayant un profil de forme générale cylindrique définissant un bord d'attaque (5)
- une pluralité de capteurs (4) comportant des lignes d'instrumentation (45) et des éléments sensibles (41), les lignes d'instrumentation (45) des capteurs étant placées dans le corps (2), les éléments sensibles (41) des capteurs s'étendant au niveau du bord d'attaque (5) ;
- un carénage aval (3) monté sur le corps amont (2) et définissant un bord de fuite (6) ;

le dispositif de mesure de grandeur aérodynamique (1) étant **caractérisé en ce que** ledit carénage aval (3) comprend, dans la direction longitudinale du corps amont (2) portant les capteurs, plusieurs tronçons de carénage aval (35) fixés indépendamment les uns des autres au corps (2), deux tronçons (35) successifs étant reliés par une jonction (37) qui dans la direction longitudinale du corps amont (2) est plus souple que les tronçons (35).

2. Dispositif de mesure de grandeurs aérodynamiques (1), selon la revendication précédente, dans lequel le carénage aval (3) est constitué de deux tronçons (35).

3. Dispositif de mesure de grandeurs aérodynamiques (1), selon l'une des revendications précédentes, dans lequel les tronçons (35) présentent, dans la direction longitudinale du corps amont, un module d'Young de plus de 50GPa.

4. Dispositif de mesure de grandeurs aérodynamiques (1), selon l'une des revendications précédentes, dans lequel la jonction souple (37) présente, dans la direction longitudinale du corps amont, un module d'Young de moins de 1GPa.

5. Dispositif de mesure de grandeurs aérodynamiques (1), selon l'une des revendications précédentes, dans lequel la jonction souple (37) est en élastomère.

6. Dispositif de mesure de grandeurs aérodynamiques (1), selon l'une des revendications précédentes, dans lequel les tronçons (35) sont en métal.

7. Dispositif de mesure de grandeurs aérodynamiques (1), selon l'une des revendications précédentes, dans lequel le carénage aval (3) est fixé au corps amont (2) par frettage.

8. Dispositif de mesure de grandeurs aérodynamiques (1), selon l'une des revendications précédentes, dans lequel le carénage aval (3) est fixé au corps amont (2) au moyen de goupilles (7).

9. Procédé de détermination de la position d'au moins une jonction souple (37) d'un dispositif de mesure de grandeurs aérodynamiques (1) selon l'une des revendications précédentes, et/ou du nombre et/ou de la position des goupilles (7) dans un dispositif de mesure de grandeurs aérodynamiques (1), selon la revendication 8, **caractérisé en ce qu'**il comporte des étapes de :

- détermination des fréquences vibratoires dans la veine d'écoulement (13) ;
- détermination de la position d'au moins une jonction souple (37) dans la direction longitudinale du corps amont et/ou du nombre et/ou de la position des goupilles (7), de manière à ce que au moins une fréquence propre du dispositif de mesure de grandeurs aérodynamiques (1) ne coïncide pas avec les fréquences vibratoires dans la veine d'écoulement (13).

10. Procédé de test d'une turbomachine (10), **caractérisé en ce qu'**il comporte une étape au cours de laquelle on place un dispositif de mesure de grandeurs aérodynamiques (1), selon l'une des revendications 1 à 8, dans une veine d'écoulement (12, 13) de la turbomachine (10).

**Patentansprüche**

1. Vorrichtung zum Messen aerodynamischer Größen (1), die bestimmt ist, quer in einer Strömungsbahn (12, 13) einer Turbomaschine platziert zu sein, aufweisend:

- einen stromaufwärtigen Körper (2) mit einem Profil einer allgemein zylindrischen Form, das eine Anströmkante (5) definiert,
- eine Vielzahl von Sensoren (4), aufweisend Instrumentierungslinien (45) und sensible Elemente (41), wobei die Instrumentierungslinien (45) der Sensoren in dem Körper (2) platziert sind, wobei sich die sensiblen Elemente (41) der Sensoren im Bereich der Anströmkante (5) erstrecken;
- eine stromabwärtige Verkleidung (3), die auf dem stromaufwärtigen Körper (2) angebracht ist und eine Austrittskante (6) definiert;

wobei die Vorrichtung zum Messen aerodynamischer Größen (1) **dadurch gekennzeichnet ist, dass** die stromabwärtige Verkleidung (3) in der Längsrichtung des stromaufwärtigen Körpers (2), der die Sensoren trägt, mehrere stromabwärtige Verkleidungsabschnitte (35) umfasst, die unabhängig voneinander an dem Körper (2) befestigt sind, wobei zwei aufeinanderfolgende Abschnitte (35) durch eine Verbindung (37) verbunden sind, die in der Längsrichtung des stromaufwärtigen Körpers (2) elastischer als die Abschnitte (35) ist.

2. Vorrichtung zum Messen aerodynamischer Größen (1) nach vorangehendem Anspruch, wobei die stromabwärtige Verkleidung (3) von zwei Abschnitten (35) gebildet ist.

3. Vorrichtung zum Messen aerodynamischer Größen (1) nach einem der vorangehenden Ansprüche, wobei die Abschnitte (35) in der Längsrichtung des stromaufwärtigen Körpers ein Young-Modul von über 50 GPa aufweisen.

4. Vorrichtung zum Messen aerodynamischer Größen (1) nach einem der vorangehenden Ansprüche, wobei die elastische Verbindung (37) in der Längsrichtung des stromaufwärtigen Körpers ein Young-Modul von unter 1 GPa aufweist.

5. Vorrichtung zum Messen aerodynamischer Größen (1) nach einem der vorangehenden Ansprüche, wobei die elastische Verbindung (37) aus Elastomer ist.

6. Vorrichtung zum Messen aerodynamischer Größen (1) nach einem der vorangehenden Ansprüche, wobei die Abschnitte (35) aus Metall sind.

7. Vorrichtung zum Messen aerodynamischer Größen (1) nach einem der vorangehenden Ansprüche, wobei die stromabwärtige Verkleidung (3) am stromaufwärtigen Körper (2) durch Schrumpfen befestigt ist.

8. Vorrichtung zum Messen aerodynamischer Größen (1) nach einem der vorangehenden Ansprüche, wobei die stromabwärtige Verkleidung (3) am stromaufwärtigen Körper (2) mit Zapfen (7) befestigt ist.

9. Verfahren zum Bestimmen der Position mindestens einer elastischen Verbindung (37) einer Vorrichtung zum Messen aerodynamischer Größen (1) nach einem der vorangehenden Ansprüche und/oder der Anzahl und/oder der Position der Zapfen (7) in einer Vorrichtung zum Messen aerodynamischer Größen (1) nach Anspruch 8, **dadurch gekennzeichnet, dass** es die Schritte umfasst:

   - Bestimmen der Vibrationsfrequenzen in der Strömungsbahn (13),
   - Bestimmen der Position mindestens einer elastischen Verbindung (37) in der Längsrichtung des stromaufwärtigen Körpers und/oder der Anzahl und/oder der Position der Zapfen (7) derart, dass mindestens eine eigene Frequenz der Vorrichtung zum Messen aerodynamischer Größen (1) nicht mit den Vibrationsfrequenzen in der Strömungsbahn (13) zusammenfällt.

10. Testverfahren einer Turbomaschine (10), **dadurch gekennzeichnet, dass** es einen Schritt umfasst, bei dem eine Vorrichtung zum Messen aerodynamischer Größen (1) nach einem der Ansprüche 1 bis 8 in einer Strömungsbahn (12, 13) der Turbomaschine (10) platziert wird.

**Claims**

1. A device for measuring aerodynamic magnitudes (1) intended to be placed transversally in a flow passage (12, 13) of a turbine engine comprising:

   - an upstream body (2) having a profile of general cylindrical shape defining a leading edge (5);
   - a plurality of sensors (4) including instrumentation lines (45) and sensitive elements (41), the instrumentation lines (45) of the sensors being placed in the body (2), the sensitive elements (41) of the sensors extending at the leading edge (5);
   - a downstream fairing (3) mounted on the upstream body (2) and defining a trailing edge (6);

   the device for measuring aerodynamic magnitude (1) being **characterized in that** said downstream fairing (3) comprises, in the longitudinal direction of the upstream body (2) bearing the sensors, several sections of downstream fairing (35) fixed independently of each other to the body (2), two successive sections (35) being connected by a junction (37) which in the longitudinal direction of the upstream body (2) is more flexible than the sections (35).

2. The device for measuring aerodynamic magnitudes (1), according to the preceding claim, wherein the downstream fairing (3) is formed of two sections (35).

3. The device for measuring aerodynamic magnitudes (1), according to one of the preceding claims, wherein the sections (35) have, in the longitudinal direction of the upstream body, a Young's modulus of over 50GPa.

4. The device for measuring aerodynamic magnitudes (1), according to one of the preceding claims, wherein the flexible junction (37) has, in the longitudinal direction of the upstream body, a Young's modulus of less than 1GPa.

5. The device for measuring aerodynamic magnitudes (1), according to one of the preceding claims, wherein the flexible junction (37) is made of elastomer.

**6.** The device for measuring aerodynamic magnitudes (1), according to one of the preceding claims, wherein the sections (35) are made of metal.

**7.** The device for measuring aerodynamic magnitudes (1), according to one of the preceding claims, wherein the downstream fairing (3) is fixed to the upstream body (2) by shrinking.

**8.** The device for measuring aerodynamic magnitudes (1), according to one of the preceding claims, wherein the downstream fairing (3) is fixed to the upstream body (2) by means of pins (7) .

**9.** A method for determining the position of at least one flexible junction (37) of a device for measuring aerodynamic magnitudes (1) according to one of the preceding claims, and/or of the number and/or of the position of the pins (7) in a device for measuring aerodynamic magnitudes (1), according to claim 8, **characterized in that** it comprises steps of:

  - determining the vibratory frequencies in the flow passage (13);
  - determining the position of at least one flexible junction (37) in the longitudinal direction of the upstream body and/or the number and/or the position of the pins (7), such that at least one specific frequency of the device for measuring aerodynamic magnitudes (1) does not coincide with the vibratory frequencies in the flow passage (13).

**10.** A test device of a turbine engine (10), **characterized in that** it comprises a step during which a device for measuring aerodynamic magnitudes (1) is placed, according to one of claims 1 to 8, in a flow passage (12, 13) of the turbine engine (10).

FIG. 1

FIG. 2

FIG. 3

FIG. 4

FIG. 5

FIG. 6

FIG. 7

FIG. 8

FIG. 9a

FIG. 9b

FIG. 9c

FIG. 10

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8397565 B

- GB 2041104 A